# EUROPEAN PATENT APPLICATION

(11) **EP 2 521 118 A2**
(43) Date of publication of application: **07.11.2012**
(21) Application number: 12158983.2
(22) Date of filing: 12.03.2012
(51) Int. Cl.: G09G 3/20

(54) **Apparatus and method for controlling brightness in portable terminal**

(30) Priority: 03.05.2011 KR 20110041955
(71) Applicant: Samsung Electronics Co., Ltd., Suwon-si, Gyeonggi-do, 443-742 (KR)
(72) Inventor: Kwon, Woo-Up, Seoul (KR)
(74) Representative: Jenkins, Richard Gavin

(57) **Abstract**

An apparatus and method for controlling a screen brightness of a portable terminal are provided. The method includes sensing a screen touch action, and setting a screen brightness value of a screen area where the screen touch action is sensed to a first value and setting a screen brightness value of the remaining screen areas to a second value lower than the first value.

## Description

### TECHNICAL FIELD OF THE INVENTION

The present invention relates to portable terminals, and more particularly, the present invention relates to an apparatus and method for controlling a screen brightness of the portable terminal.

### BACKGROUND OF THE INVENTION

Changes in an environment are often encountered when using an apparatus equipped with a portable display device. The use of the display device is usually not a problem in an office, such as where fluorescent lighting is used, a bathroom where incandescent lighting is used, and a typical environment where light from the Sun is used as main lighting.

### SUMMARY OF THE INVENTION

To address the above-discussed deficiencies of the prior art, it is a primary object to provide at least the advantages described below. Accordingly, an aspect of the present invention is to provide an apparatus and method for controlling a screen brightness of a portable terminal.

Another aspect of the present invention is to provide an apparatus and method for allowing a user to check for only a specific portion desired by the user in a state where a screen brightness of a portable terminal is dimmed.

Another aspect of the present invention is to provide an apparatus and method in which a screen brightness value of a screen area in which a touch is sensed by a user in a portable terminal is set to a specified value for correctly confirming content on a screen by the user, or is set to a value corresponding to a current illumination value, and a screen brightness value of the remaining screen areas is set to a minimum value.

In accordance with an aspect of the present invention, a method for controlling a screen brightness of a portable terminal is provided. The method includes sensing a screen touch, and setting a screen brightness value of a screen area where a touch is sensed to a first value and setting a screen brightness value of the remaining screen areas to a second value that is lower than the first value.

In accordance with another aspect of the present invention, an apparatus for controlling a screen brightness of a portable terminal is provided. The apparatus includes a screen brightness control unit for setting a screen brightness value of a screen area where a touch is sensed to a first value and setting a screen brightness value of the remaining screen areas to a second value that is lower than the first value.

The present invention is to provide a method for controlling a screen brightness of a portable terminal comprising sensing a screen input; and setting a screen brightness value of a screen area where a touch is sensed to a first value and setting a screen brightness value of the remaining screen areas to a second value that is different from the first value.

Preferably, the method, before the sensing of the screen input, further comprises periodically collecting ambient illumination information; determining whether a current ambient illumination value is less than a threshold; and if the current ambient illumination value is less than the threshold, setting a screen brightness value of the entire screen to the second value.

Preferably, the method, after the sensing of the screen input, further comprises determining a screen brightness value corresponding to a current ambient illumination value by using a table that associates a screen brightness with the ambient illumination, wherein the first value is set to a value corresponding to the determined current illumination value, and wherein the table comprises a plurality entries each having an illumination value that is proportional to the screen brightness value.

Preferably, the method further comprises sensing a second input in the screen; and setting a screen brightness value of a screen area where the second input is sensed to the first value, and setting a screen brightness value of the remaining screen areas to the second value.

The present invention is to provide an apparatus for controlling a screen brightness of a portable terminal comprising a screen brightness control unit for setting a screen brightness value of a screen area where an input is sensed to a first value and setting a screen brightness value of the remaining screen areas to a second value.

Preferably, the apparatus further comprises an input unit configured to determine whether a key for controlling the screen brightness is input wherein if the key is inputted, the screen brightness control unit configured to set a screen brightness value of a full screen to the second value and wherein the first value is a value sufficient for confirming content on the screen by a user and is set to a value lower than a screen brightness value used before the screen brightness is controlled.

Preferably, the apparatus further comprises a sensing unit configured to periodically collect ambient illumination information wherein before the sensing of the screen touch, the screen brightness control unit determines whether a current illumination value is less than a threshold, and if the current illumination value is less than the threshold, sets a screen brightness value of a full screen to the second value.

Preferably, wherein, after the sensing of the screen touch, the screen brightness control unit determines a screen brightness value corresponding to a current illumination value by using a table that associates the screen brightness with the ambient illumination, the first value is set to a value corresponding to the determined current illumination value, and the table comprises a plurality of entries each having an illumination value that is proportional to the screen brightness value.

Preferably, wherein each entry having a relatively low illumination value is mapped to a relatively low screen brightness value and each entry having a relatively high illumination value is mapped to a relatively high screen brightness value.

Preferably, wherein the display unit senses a screen touch movement, and wherein the screen brightness control unit sets a screen brightness value of a screen area where a touch movement is sensed to the first value, and sets a screen brightness value of the remaining screen areas to the second value.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:

FIGURE 1 illustrates an example structure of a portable terminal according to an exemplary embodiment of the present invention;

FIGURE 2 illustrates an example method for controlling a screen brightness of a portable terminal according to a first exemplary embodiment of the present invention;

FIGURE 3 illustrates an example method for controlling a screen brightness of a portable terminal according to a second exemplary embodiment of the present invention; and

FIGURE 4 illustrates an example method for controlling a screen brightness of a portable terminal according to an exemplary embodiment of the present invention.

### DETAILED DESCRIPTION OF THE INVENTION

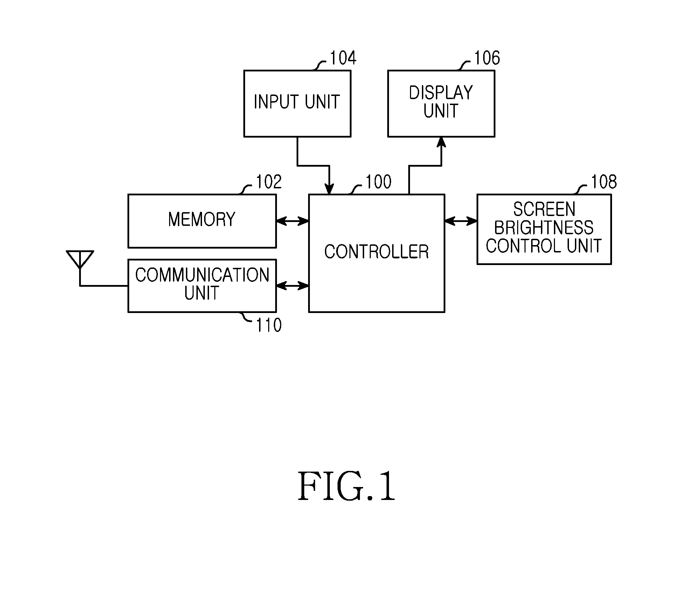

FIGURES 1 through 4, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged display devices. Exemplary embodiments of the present invention will be described herein below with reference to the accompanying drawings. In the following description, well-known functions or constructions are not described in detail since they would obscure the invention in unnecessary detail. Also, the terms used herein are defined according to the functions of the present invention. Thus, the terms may vary depending on user's or operator's intension and usage. That is, the terms used herein must be understood based on the descriptions made herein.

The present invention described hereinafter relates to a method for controlling a screen brightness of a portable terminal.

In the following description, the portable terminal includes any type of device incorporating a display device. Preferably, the present invention is applicable to all information communication devices and multimedia devices such as a mobile communication terminal having a built-in communication function, a mobile phone, a digital broadcasting terminal, a Personal Digital Assistants (PDA), a smart phone, an International Mobile Telecommunication 2000 (IMT-2000) terminal, a Code Division Multiple Access (CDMA) terminal, a Global Standard for Mobile Communication (GSM) terminal, a Wideband Code Division Multiple Access (WCDMA) terminal, a High Speed Downlink Packet Access (HSDPA) terminal, a World Interoperability for Microwave Access (Wimax) terminal, a Universal Mobile Telecommunication Service (UMTS) terminal, etc.

FIGURE 1 illustrates an example structure of a portable terminal according to an exemplary embodiment of the present disclosure.

The portable terminal includes a controller 100, a memory 102, an input unit 104, a display unit 106, a screen brightness control unit 108, and a communication unit 110.

Referring to FIGURE 1, the controller 100 provides overall control to the portable terminal. According to the present disclosure, the controller controls and processes an overall operation for controlling a screen brightness of the portable terminal.

The memory 102 stores instructions of one or more programs for processing and control of the controller 100, reference data, temporary data that is generated while programs are performed, and a rewritable data. In particular, according to the present disclosure, the memory 102 stores a program for controlling the screen brightness. In addition, according to the embodiment, the memory 102 can store a table that defines a screen brightness value for each of multiple illumination values.

The input unit 104 includes numeral key buttons and a plurality of function key buttons to provide the controller 100 with key button input data corresponding to a key button pressed by the user.

The display unit 106 displays information such as state information, which is generated while the portable terminal operates, a limited number of characters, a large volume of moving and still pictures, and the like. Herein, the display unit 106 can be configured with a touch screen. In this case, the display unit 106 can detect a coordinate of an area where a user's touch occurs by sensing the touch, and can provide the detected coordinate to the controller 100.

The screen brightness control unit 108 controls the screen brightness value of the display unit 106. That is, the screen brightness control unit 108 sets a screen brightness value of a screen area where a touch is sensed by the user to a specified value capable of correctly confirming content on the screen by the user. The screen brightness control unit 108 may also set the screen brightness value to a value corresponding to a current illumination value, and sets a screen brightness value of the remaining screen areas to a minimum value.

The communication unit 110 transmits and receives a Radio Frequency (RF) signal which is input and output through an antenna. For example, in a transmission process, the communication unit 110 performs a function for up-converting a baseband signal to be transmitted into an RF signal and for transmitting the RF signal through the antenna, and in a receiving process, the communication unit 110 performs a function for down-converting an RF signal transmitted through the antenna into a baseband signal and for restoring data.

Although not shown, the portable terminal of the present disclosure may further include a sensing unit. In this case, the sensing unit can be implemented by an ambient light sensor, and senses a brightness of a surrounding environment (i.e., an ambient light) of the portable terminal.

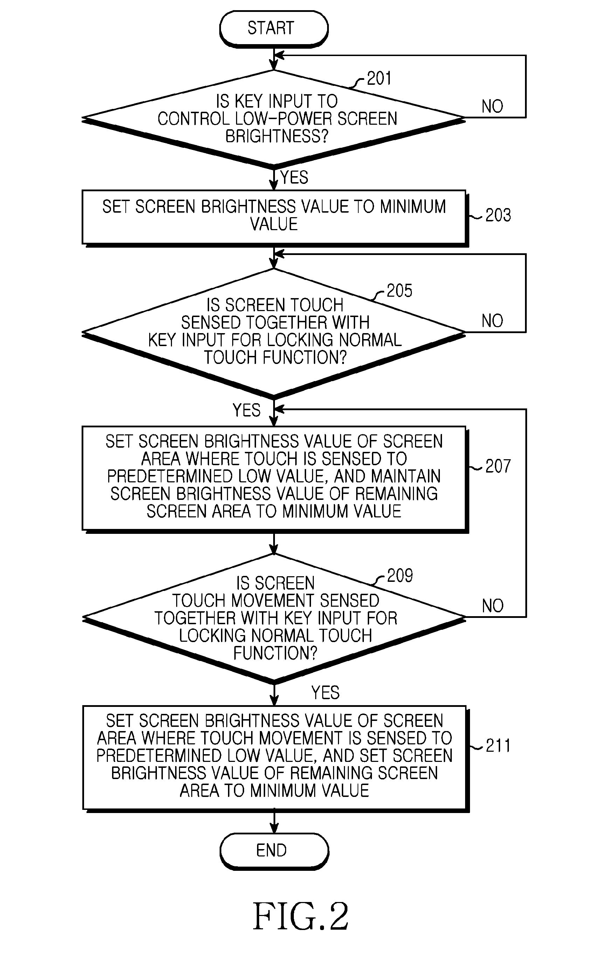

FIGURE 2 illustrates an example method for controlling a screen brightness of a portable terminal according to a first exemplary embodiment of the present disclosure.

Referring to FIGURE 2, the terminal determines whether a key for controlling a low-power screen brightness of the terminal is input according to a user's input in step 201. Herein, the key for controlling the low-power screen brightness is a key for any suitable reason which may include, for example, reducing battery consumption of the terminal by controlling the screen brightness of the terminal when a remaining battery amount is not enough irrespective of a brightness of a surround environment, and for reducing a dazzling phenomenon in a dark environment. In some embodiments, the key can be implemented by combining a volume down key and a unlock key.

If it is determined in step 201 that the key for controlling the low-power screen brightness is input by user's key manipulation, proceeding to step 203, the terminal sets a screen brightness value of the entire screen to a minimum value. Alternatively, the terminal may set the screen brightness value to a value for recognizing a change in the screen even if it is difficult for the user to correctly confirm content on the screen, or may not set the screen brightness value.

In step 205, the terminal determines whether a screen touch event is sensed together with a key input for locking a normal touch function according to user's key manipulation. Herein, the key for locking the normal touch function is a key for inactivating the normal touch function, such as, a function of moving to another screen upon sensing of a touch or a function of scrolling content on a screen upon sensing a touch and drag. For example, the key can be implemented with a volume down key.

If it is determined in step 205 that the screen touch is sensed together with the key input for locking the normal touch function according to user's key manipulation, proceeding to step 207, the terminal sets a screen brightness value of a screen area where a touch is sensed to a specified value capable of correctly confirming content on the screen by the user, and maintains other areas of the screen at a minimum brightness value. Herein, the screen area where the touch is sensed implies a screen area having a specified size and shape around a touch point (e.g., an area or point which is brought in contact with the screen by using a finger or pen). The specified size and shape of the adjusted area on the screen can be suitable value. For example, the size may include any portion of the screen while the shape may be any type, such as a circle, square, or the like around the touch point.

In step 209, the terminal determines whether a screen touch movement (e.g., a touch point movement or a touch and drag) is sensed together with the key input for locking the normal touch function according to user's key manipulation.

If it is determined in step 209 that the touch movement is sensed together with the key input for locking the normal touch function according to user's key manipulation, proceeding to step 211, the terminal sets a screen brightness value of a screen area where a screen touch movement is sensed to a specified value capable of correctly confirming content on the screen by the user, and sets a screen brightness value of the remaining screen areas to a minimum value.

Otherwise, if it is determined in step 209 that the touch movement is not sensed together with the key input for locking the normal touch function according to user's key manipulation, returning to step 207, the subsequent steps may be repeated.

The procedure of FIGURE 2 ends.

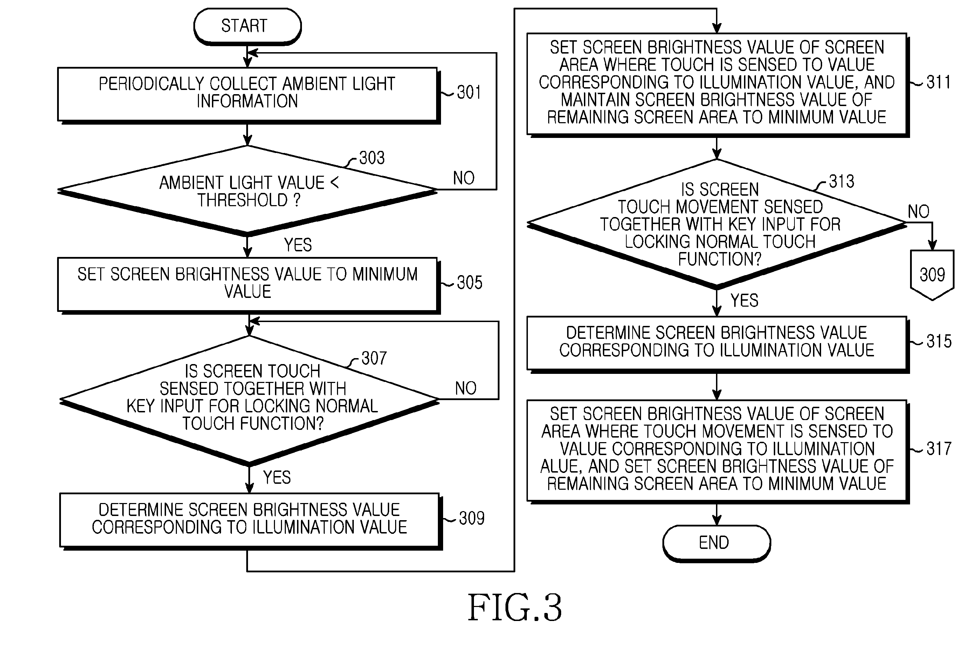

FIGURE 3 illustrates an example method for controlling a screen brightness of a portable terminal according to a second exemplary embodiment of the present disclosure.

Referring to FIGURE 3, the terminal periodically collects ambient light information by using an ambient light sensor in step 301.

In step 303, the terminal determines whether a current ambient light value is less than a threshold on the basis of the periodically collected ambient light information.

If it is determined in step 303 that the current ambient light value is not less than the threshold, the terminal determines that it the ambient environment is not dark, and returning to step 301, the subsequent steps are repeated.

Otherwise, if it is determined in step 303 that the current ambient light value is less than the threshold, proceeding to step 305, the terminal determines that the ambient environment is dark, and sets a screen brightness value of the entire screen to a minimum value. In some cases, this may decrease a dazzling phenomenon. Alternatively, in another method, the terminal may set to the screen brightness value to a relatively low value that may be capable of recognizing a change in a screen even if it is difficult for the user to correctly confirm content on the screen, or may not set the screen brightness value.

In step 307, the terminal determines whether a screen touch is sensed together with a key input for locking a normal touch function according to user's key manipulation. Herein, the key for locking the normal touch function is a key for inactivating the normal touch function, such as, a function of moving to another screen upon sensing of a touch or a function of scrolling content on a screen upon sensing a touch and drag action. For example, the key can be implemented with a volume down key.

If it is determined in step 307 that the screen touch is sensed together with the key input for locking the normal touch function according to user's key manipulation, proceeding to step 309, the terminal determines a screen brightness value corresponding to a current illumination value by using a table that defines a screen brightness per illumination. In the table, the lower the illumination value, the lower the screen brightness value that is mapped, whereas the higher the illumination value, the higher the screen brightness value that is mapped.

In step 311, the terminal sets a screen brightness value of a screen area where a touch is sensed to a value corresponding to the determined current illumination value, and maintains a screen brightness value of the remaining screen areas to a minimum value. Alternatively, in another method, the terminal may set the screen brightness value of the screen area where the touch is sensed to a specified value capable of correctly confirming content on the screen by the user, and may set a screen brightness value of the remaining screen areas to a minimum value. In this case, step 309 is skipped. Herein, the screen area where the touch is sensed implies a screen area having a specified size and shape around a touch point.

In step 313, the terminal determines whether a screen touch movement (e.g., a touch point movement or a touch and drag action) is sensed together with the key input for locking the normal touch function according to user's key manipulation.

If it is determined in step 313 that the screen touch movement is sensed together with the key input for locking the normal touch function according to user's key manipulation, proceeding to step 315, the terminal determines a screen brightness value corresponding to a current illumination value by using a table that defines a screen brightness per illumination.

In step 317, the terminal sets a screen brightness value of a screen area where a touch movement is sensed to a value corresponding to the determined current illumination value, and sets a screen brightness value of the remaining screen areas to a minimum value. Alternatively, in another method, the terminal may set the screen brightness value of the screen area where the touch movement is sensed to a specified value capable of confirming content on the screen by the user, and may set a screen brightness value of the remaining screen areas to a minimum value. In this case, step 315 is skipped.

Otherwise, if it is determined in step 313 that the touch movement is not sensed together with the key input for locking the normal touch function according to user's key manipulation, returning to step 309, the subsequent steps may be repeated.

Thereafter, the procedure of FIGURE 3 ends.

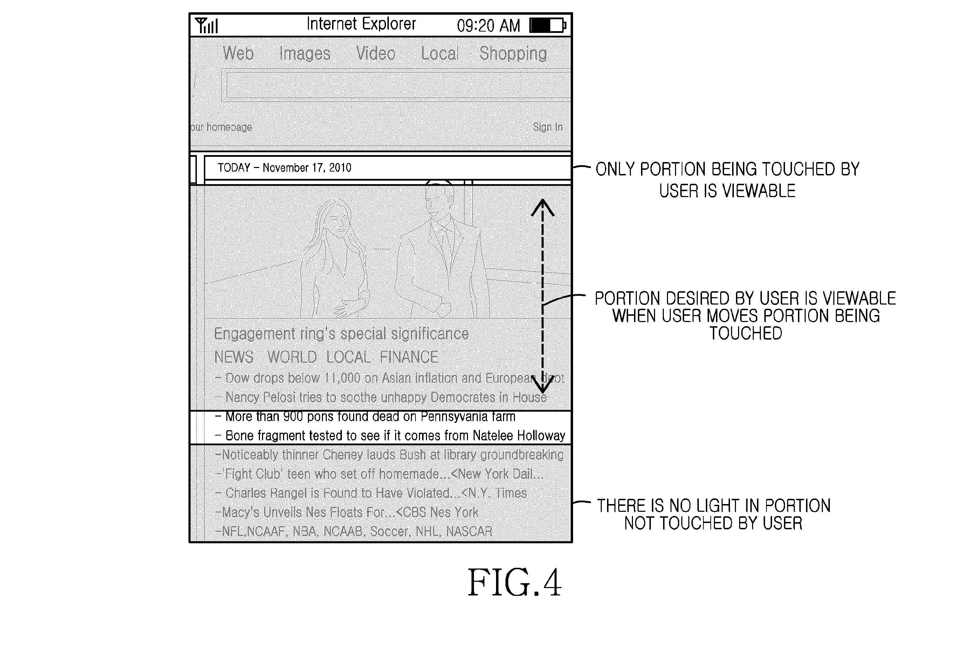

As such, in the present disclosure, a screen brightness value of a screen area where a touch is sensed is set to a specified value capable of correctly confirming content on the screen by a user or is set to a value corresponding to a current illumination value, and a screen brightness value of the remaining screen areas is set to a minimum value. Therefore, as illustrated in FIGURE 4, the user can confirm content on a screen area touched by the user with a minimum light brightness in a dark environment while avoiding a dazzling phenomenon. In this case, since there is almost no light in the remaining areas other than the screen area touched by the user, the user can confirm content on a screen area desired by the user by moving a touch point.

According to exemplary embodiments of the present disclosure, a screen brightness value of a screen area where a touch is sensed by a user is set to a specified value capable of correctly confirming content on the screen by the user or is set to a value corresponding to a current illumination value, and a screen brightness value of the remaining screen areas is set to a minimum value. Therefore, there may be an advantage in that the user can confirm content on a screen area touched by the user with a minimum light brightness in a dark environment while avoiding a dazzling phenomenon. In addition, even if it is not dark, when a remaining battery amount is not enough, battery consumption of a terminal can be reduced by controlling a screen brightness of the terminal according to the present disclosure.

While the present disclosure has been particularly shown and described with reference to exemplary embodiments thereof, it will be understood by those skilled in the art that various changes in form and details may be made therein without departing from the spirit and scope of the present disclosure as defined by the appended claims.

## Claims

1. A method for controlling a screen brightness of a portable terminal, the method comprising:
sensing a screen touch; and
setting a screen brightness value of a screen area where a touch is sensed to a first value and setting a screen brightness value of the remaining screen areas to a second value that is lower than the first value.

2. The method of claim 1, before the sensing of the screen touch, further comprising:
determining whether a key for controlling the screen brightness is input;
and
if the key is inputted, setting a screen brightness value of a full screen to the second value,
wherein the first value is a value capable of confirming content on the screen by a user and is set to a value lower than a screen brightness value before the screen brightness is controlled.

3. The method of claim 1, before the sensing of the screen touch, further comprising:
periodically collecting ambient illumination information;
determining whether a current illumination value is less than a threshold;
and
if the current illumination value is less than the threshold, setting a screen brightness value of a full screen to the second value.

4. The method of claim 3, after the sensing of the screen touch, further comprising
determining a screen brightness value corresponding to a current illumination value by using a table that associates a screen brightness with the ambient illumination,
wherein the first value is set to a value corresponding to the determined current illumination value, and
wherein the table comprises a plurality of entries each having an illumination value that is proportional to the screen brightness value.

5. The method of claim 1, further comprising:
sensing a screen touch movement; and
setting a screen brightness value of a screen area where a touch movement is sensed to the first value, and setting a screen brightness value of the remaining screen areas to the second value.

6. An apparatus for controlling a screen brightness of a portable terminal, the apparatus comprising:
a screen brightness control unit configured to set a screen brightness value of a screen area where a touch is sensed to a first value and setting a screen brightness value of the remaining screen areas to a second value that is lower than the first value.

7. The apparatus of claim 6, further comprising
an input unit configured to determine whether a key for controlling the screen brightness is input,
wherein if the key is inputted, the screen brightness control unit configured to set a screen brightness value of a full screen to the second value, and
wherein the first value is a value sufficient for confirming content on the screen by a user and is set to a value lower than a screen brightness value used before the screen brightness is controlled.

8. The apparatus of claim 6, further comprising
a sensing unit configured to periodically collect ambient illumination information,
wherein before the sensing of the screen touch, the screen brightness control unit determines whether a current illumination value is less than a threshold, and if the current illumination value is less than the threshold, sets a screen brightness value of a full screen to the second value.

9. The apparatus of claim 8, wherein:
after the sensing of the screen touch, the screen brightness control unit determines a screen brightness value corresponding to a current illumination value by using a table that associates the screen brightness with the ambient illumination,
the first value is set to a value corresponding to the determined current illumination value, and
the table comprises a plurality of entries each having an illumination value that is proportional to the screen brightness value.

10. The apparatus of claim 6,
wherein the display unit senses a screen touch movement, and
wherein the screen brightness control unit sets a screen brightness value of a screen area where a touch movement is sensed to the first value, and sets a screen brightness value of the remaining screen areas to the second value.

11. A method for controlling a screen brightness of a portable terminal, the method comprising:
sensing a screen input; and
setting a screen brightness value of a screen area where a touch is sensed to a first value and setting a screen brightness value of the remaining screen areas to a second value that is different from the first value.

12. The method of claim 11, before the sensing of the screen input, further comprising:
periodically collecting ambient illumination information;
determining whether a current ambient illumination value is less than a threshold; and
if the current ambient illumination value is less than the threshold, setting a screen brightness value of a full screen to the second value.

13. The method of claim 12, after the sensing of the screen input, further comprising
determining a screen brightness value corresponding to a current ambient illumination value by using a table that associates a screen brightness with the ambient illumination,
wherein the first value is set to a value corresponding to the determined current illumination value, and
wherein table comprises a plurality entries each having an illumination value that is proportional to the screen brightness value.

14. The method of claim 1, further comprising:
sensing a second input on the screen; and
setting a screen brightness value of a screen area where the second input is sensed to the first value, and setting a screen brightness value of the remaining screen areas to the second value.

15. An apparatus for controlling a screen brightness of a portable terminal, the apparatus comprising
a screen brightness control unit configured to set a screen brightness value of a screen area where an input is sensed to a first value and setting a screen brightness value of the remaining screen areas to a second value.
